# FASCICULE DE BREVET EUROPEEN

(11) **EP 0 623 664 B1**
(45) Date de publication et mention de la délivrance du brevet: **02.09.1998**
(21) Numéro de dépôt: 94400889.5
(22) Date de dépôt: 25.04.1994
(51) Int. Cl.: C10G 35/09, B01J 23/64, B01J 23/62, B01J 37/02

(54) **Procédé d'hydroréformage catalytique**
Katalytisches Hydroreformierungsverfahren
Catalytic hydroforming process

(30) Priorité: 06.05.1993 FR 9305553
(43) Date de publication de la demande: 09.11.1994
(73) Titulaire: INSTITUT FRANCAIS DU PETROLE, 92502 Rueil-Malmaison (FR)
(72) Inventeur: Le Peltier, Fabienne, F-92500 Rueil Malmaison (FR); Sarrazin, Patrick, F-92500 Rueil Malmaison (FR); Didillon, Blaise, F-92500 Rueil Malmaison (FR); Boitiaux, Jean-Paul, F-78300 Poissy (FR)

(56) Documents cités:
- FR-A- 2 210 443
- FR-A- 2 539 647
- FR-A- 2 545 380
- FR-A- 2 594 711
- US-A- 3 531 543
- US-A- 4 888 104

## Description

La présente invention concerne un procédé de conversion d'hydrocarbures par hydroréformage, en présence d'un catalyseur renfermant au moins un support, au moins un métal de la famille du platine (la présence de platine étant nécessaire, il peut être combiné avec un autre élément du groupe VIII du tableau périodique), d'au moins un métal additionnel (dénommé métal M) qui est choisi parmi le germanium, l'étain, le plomb, le gallium, l'indium et le thallium et un halogène (ou un composé halogéné).

Les brevets et publications démontrant que l'addition de promoteurs à un métal de base améliore la qualité des catalyseurs sont fort nombreux. Ces éléments sont ajoutés sous différentes formes telles que sels ou composés organométalliques. On obtient généralement des catalyseurs plus actifs ou plus sélectifs, parfois plus stables qu'avec le métal de base. La façon dont ces modificateurs sont apportés n'est pas indifférente car elle conditionne fortement les propriétés du catalyseurs.

On connaît de longue date des catalyseurs acides renfermant outre un support, un métal noble de la famille du platine et au moins un métal additionnel choisi dans le groupe de constitué par l'étain, le germanium et le plomb (FR-A-2031984) le gallium, l'indium et/ou le thallium (US-A-2814599).

La présente invention concerne la modification d'un catalyseur appelé ci-après "précatalyseur" de départ par ajout dans des conditions bien contrôlées des éléments modificateurs directement dans le réacteur où l'utilisation du catalyseur doit être faite. Cette façon de faire présente de nombreux avantages pratiques mais on a pu constater, de manière surprenante, qu'un tel mode de fabrication permettait l'obtention de catalyseurs bien plus performants que ceux obtenus par préparation hors site.

Le procédé d'hydroréformage (ou hydroreforming) catalytique ainsi que le procédé catalytique de fabrication d'hydrocarbures aromatiques selon l'invention, sont effectués par exemple à une température comprise entre 400°C et 600°C, sous une pression absolue comprise entre 0,1 et 3,5 MPa, avec une vitesse horaire comprise entre 0,1 et 10 volumes de charge liquide par volume de catalyseur, le rapport hydrogène sur hydrocarbures étant compris entre 1 et 20. Les catalyseurs préparés selon l'invention permettent notamment d'effectuer ces deux procédés dans des conditions sévères. Ainsi l'utilisation des catalyseurs s'applique en particulier aux réactions de réformage en vue d'obtenir une essence d'indice d'octane clair supérieur ou égal à 102. Les conditions sévères des réactions d'hydroreforming ou d'hydroréformage catalytique sont plus particulièrement les suivantes: une température moyenne comprise entre 480°C et 580 °C environ, une pression comprise entre 0,2 et 1,8 MPa et de préférence entre 0,3 et 3 MPa, une vitesse horaire comprise entre 1 et 10 volumes de charge liquide par volume de catalyseur et un taux de recyclage compris entre 1 et 6 moles d'hydrogène par mole de charge. Si la charge est insaturée, c'est-à-dire si elle contient des mono ou polyoléfines, elle devra d'abord en être débarrassée par hydrogénation totale. La charge est généralement un naphta de distillation directe, une essence de pyrolyse, de craquage, en particulier de réformage à la vapeur.

Le support du catalyseur selon l'invention comporte au moins un oxyde réfractaire qui est généralement choisi parmi les oxydes des métaux des groupes II, III ou IV de la classification périodique des éléments tels que par exemple les oxydes de magnésium, d'aluminium, de silicium, de titane, de zirconium, de thorium pris seuls ou en mélange entre eux ou en mélange avec d'autres oxydes d'éléments de la classification périodique. On peut aussi utiliser le charbon. On peut également utiliser des zéolithes ou tamis moléculaires de type X, Y, mordénite, faujasite, ZSM-5, ZSM-4, ZSM-8... ainsi que les mélanges d'oxydes de métaux des groupes II, III et/ou IV avec du matériau zéolithique.

Pour les réactions de réformage ou de production d'hydrocarbures aromatiques, le support préféré est l'alumine, dont la surface spécifique est avantageusement comprise entre 50 et 400 m² par gramme, de préférence entre 100 et 400 m² par gramme.

Le précatalyseur est préparé à partir d'un support préformé selon les méthodes classiques consistant à imprégner le support au moyen de solutions de composés des éléments que l'on désire introduire. On utilise soit une solution commune des métaux présents dans le précatalyseur soit des solutions distinctes dans un ordre quelconque. Quand on utilise plusieurs solutions, on peut procéder à des séchages et/ou des calcinations intermédiaires.

Par exemple l'introduction du platine (et éventuellement des autres métaux du groupe VIII et par exemple les éléments de la famille du platine) peut être réalisée par imprégnation du support par une solution aqueuse d'un composé halogéné. Le platine est préférentiellement introduit sous forme d'acide chloroplatinique.
Après l'introduction du métal du groupe VIII, le produit obtenu est calciné après un éventuel séchage, la calcination est effectuée de préférence à une température comprise entre 400 et 700 °C et éventuellement en présence d'un composé organique halogéné. Les composés organiques halogénés sont choisis par exemple dans le groupe formé par le tétrachlorure de carbone, le chloroforme, le dichlorométhane et le dichloropropane comme décrit dans le brevet Fr-A-2.594.711.

Dans ce même brevet, l'introduction du ou des métaux M additionnels a également été décrite. Ainsi, après introduction de l'halogène on procède à l'introduction du ou des métaux additionnels dans le précatalyseur. Éventuellement avant d'introduire ledit métal M on procède à une réduction à l'hydrogène à haute température, par exemple entre 300 et 500 °C. Cette réduction peut consister par exemple en une montée lente en température, sous courant d'hydrogène jusqu'à la température désirée comprise entre 300 et 500 °C et de préférence entre 350 et 450 °C, suivie d'un maintien sous hydrogène pendant 1 à 6 heures à cette température.

Le métal additionnel M est introduit sous la forme d'au moins un composé organométallique ou alcoolate choisi dans le groupe formé par les complexes, en particulier les complexes carbonyles, polycétoniques des métaux M, et les hydrocarbylmétaux du métal M tels que les alkyles, les cycloalkyles, les aryles, les alkylaryles métaux et les arylalkyles métaux.

L'introduction du métal M est avantageusement effectuée à l'aide d'une solution dans un solvant organique du composé alcoolate ou organométallique dudit métal M. On peut également employer des composés organo-halogénés des métaux M. Comme composés de métaux M on citera en particulier, le tétrabutylétain, le tétraméthylétain, le tétrapropylgermanium, le diphénylétain, le tétraéthyl plomb, l'acéthylacétonate d'indium, l'acéthylacétonate de thallium, l'éthanolate de tallium, le triéthylgallium, un carbonyl de rhénium.

Le solvant d'imprégnation est choisi dans le groupe constitué par les solvants organiques oxygénés contenant de 2 à 8 atomes de carbone par molécule, et les hydrocarbures paraffiniques, naphténiques ou aromatiques contenant essentiellement de 6 à 15 atomes de carbone par molécule et les composés organiques halogénés contenant de 1 à 15 atomes de carbone par molécule. On peut citer l'éthanol, le tétrahydrofuranne, le n-heptane, le méthyl cyclohexane, le toluène et le chloroforme. On peut utiliser ces solvants pris seuls ou en mélange entre eux, ainsi que décrit dans le brevet US-A-4548918.

On a maintenant découvert qu'une introduction du métal additionnel M in-situ produisait des résultats inattendus. L'introduction est caractérisée en ce que ledit métal additionnel M est introduit par mise en contact sous atmosphère inerte (par exemple azote) ou réductrice (par exemple hydrogène) d'au moins un composé organique du métal additionnel M (pur ou dilué éventuellement dans au moins une solution hydrocarbonée), avec le précatalyseur chargé dans le réacteur où seront injectées la ou les charges réactionnelles, par exemple les hydrocarbures qui subiront la transformation d'hydroréformage en présence du catalyseur ainsi préparé ou avec le précatalyseur chargé dans un préréacteur directement relié audit réacteur. Le précatalyseur est, dans la présente invention un catalyseur renfermant au moins un support, au moins un métal du groupe VIII de la classification périodique des éléments, éventuellement un halogène ou un composé halogéné. Ce précatalyseur ne renferme pas ledit métal additionnel M.

L'addition du métal additionnel M est réalisée in-situ en phase liquide ou en phase gazeuse c'est à dire dans le réacteur industriel (zone de réaction) ou dans un préréacteur industriel (prézone de réaction) directement relié au dit réacteur et où le précatalyseur, précurseur du catalyseur fini est chargé. Cette opération de fixation du métal additionnel M peut être réalisée entre 20 et 500 °C.

La préparation du précatalyseur, précurseur du catalyseur fini, se fait selon toute technique connue de l'homme du métier.

En vue de procéder à l'introduction du métal M dans le précatalyseur, on commence par charger le précatalyseur dans le réacteur industriel ou dans le préréacteur industriel. Avant de procéder à ce chargement, le précatalyseur est éventuellement séché et soumis à une calcination sous atmosphère oxydante entre 450 et 600 °C. Selon l'invention, le précatalyseur est ensuite soumis à un traitement d'activation sous atmosphère réductrice (hydrogène) ou inerte (azote). La solution préférée est un traitement d'activation sous hydrogène à haute température par exemple entre 300 et 600 °C. Cette réduction peut consister par exemple en une montée lente de la température sous courant d'hydrogène jusqu'à la température maximale de réduction, comprise par exemple entre 300 et 600 °C suivie d'un maintien sous hydrogène pendant 1 à 6 heures à cette température.

Après avoir ajusté la température à la valeur désirée, comprise entre 20 et 500 °C, de préférence sous débit d'hydrogène, on procède ensuite à l'introduction du métal M. Avant mise en contact avec la charge à traiter le solvant d'imprégnation est éliminé si nécessaire et l'on procède à un traitement thermique sous débit gazeux, d'hydrogène de préférence, à haute température, comprise entre 300 et 600 °C , pendant plusieurs heures.

Le catalyseur selon l'invention renferme de préférence en poids par rapport au support (a) environ 0,01 % à 2 % et de préférence 0,1 à 0,5 % d'au moins un métal noble de la famille du platine dont 0,01 à 2% et de préférence 0,01 à 1% de platine, (b) environ 0,005 à 0,5%, avantageusement de 0,005 à 0,3 % et de préférence 0,01 à 0,2 % d'étain ou 0,0058 à 0,3 % et de préférence environ 0,01 à 0,25 % d'au moins un métal choisi dans le groupe constitué par le germanium, le plomb, l'indium, le gallium, le rhénium, le tungstène et le thallium et (c) environ 0,1 % à 15 % poids et de manière préférée 0,9 à 2,8 % d'un halogène tel que le chlore ou le fluor. La teneur globale en métaux M des catalyseurs renfermant de l'étain et un autre métal M étant d'environ 0,01 à 0,48 % et de préférence 0,02 à 0,3 %.

Une méthode préférée de préparation de catalyseurs selon l'invention consiste à opérer comme suit:
(a) on imprègne un support, à l'aide d'une solution aqueuse contenant au moins un métal du groupe VIII. On obtient ainsi une masse catalytique appelée précédemment "précatalyseur" ;
(b) on sèche la masse catalytique (ou précatalyseur) obtenue ;
(c) on calcine la masse catalytique obtenue en présence d'un composé halogéné ;
(d) on charge la masse catalytique obtenue dans un réacteur industriel ou dans un préréacteur industriel ;
(e) on réduit la masse catalytique calcinée chargée dans le réacteur ;
(f) on met en contact la masse catalytique réduite chargée dans le réacteur avec le composé organique du métal additionnel M pur ou solubilisé dans un solvant hydrocarboné ;
(g) si nécessaire on élimine le solvant ;
(h) on réduit la masse catalytique contenant le platine ou le métal noble de la famille du platine et le métal additionnel M.

On a ainsi découvert qu'en opérant en présence de catalyseurs préparés selon l'invention, ces catalyseurs possédaient une activité, et une durée de vie accrues et une meilleure régénérabilité, par rapport aux catalyseurs de l'art antérieur, préparés selon les techniques de l'art antérieur.

Les exemples suivants, non limitatifs, illustrent l'invention.

### EXEMPLE 1

On prépare trois catalyseurs A, B et C renfermant 0,25 % en poids de platine, 0,14 % en poids d'étain et 1,5 % en poids de chlore. Le support est une alumine de surface spécifique de 220 m² par gramme et de volume poreux de 0,60 cm³ par gramme.

### Préparation du catalyseur A (comparatif)

On prépare un catalyseur A selon les techniques de l'art antérieur.

À100 g de support d'alumine on ajoute 500 cm³ d'une solution aqueuse d'acide chlorhydrique. On laisse en contact trois heures et on essore. Sur le produit séché contenant du chlore, on procède alors à l'imprégnation du platine et de l'étain en ajoutant au solide 60 cm³ d'une solution d'acide hexachloroplatine et de chlorure stannique. La concentration en platine de cette solution est égale à 4,2 g par litre et la concentration en étain est de 2,33 g par litre. On laisse en contact 6 heures, on sèche 1 heure à 120 °C puis on calcine 2 heures à 530 °C.

### Préparation du catalyseur B (comparatif)

Le catalyseur B est préparé à partir de 100 g de support alumine. On procède à l'introduction du platine et du chlore par ajout de 60 cm³ d'une solution aqueuse d'acide hexachloroplatinique et d'acide chlorhydrique contenant en tout 0,25 g de platine et 1,5 g de chlore. On laisse 4 heures en contact, on sèche 1 heure à 120 °C puis on calcine pendant 2 heures à 530 °C. On réduit ensuite le catalyseur 2 heures sous un débit d'hydrogène de 80 litres par heure à 450°C.

Ensuite sur 50 g du produit réduit contenant le platine (appelé précédemment précatalyseur), on procède alors à l'imprégnation de l'étain dans un ballon réactionnel, en ajoutant 30 cm³ d'une solution de n-heptane contenant 0.21 g de tétrabutylétain. On laisse en contact 8 heures à la température ambiante sous un débit d'hydrogène de 85 litres par heure. Le solide obtenu est essoré puis séché à 120 °C et ensuite calciné à 530 °C pendant 2 heures.

### Préparation du catalyseur C (selon l'invention)

10 g de précatalyseur calciné au platine sont préparés dans les mêmes conditions que celles décrites pour le catalyseur B. Le précatalyseur est ensuite chargé dans un réacteur tubulaire isotherme fonctionnant en flux descendant à la pression atmosphérique.

Le précatalyseur est ensuite réduit 2 heures dans le réacteur sous 20 litres par heure d'hydrogène à 530 °C. La température est alors diminuée à la température ambiante tout en conservant le débit d'hydrogène. On fait alors circuler une solution de n-heptane contenant 0.05 g de tétrabutylétain. La circulation du solvant est maintenue pendant 8 heures à la température ambiante toujours sous débit d'hydrogène. Le solvant est alors éliminé et l'on procède à une réduction du catalyseur sous un débit d'hydrogène de 20 litres par heure pendant 2 heures à 530 °C. Ce catalyseur appelé catalyseur C est directement utilisable pour la réaction catalytique envisagée.

### EXEMPLE 2

Les catalyseurs A, B et C sont soumis à un test de réformage catalytique. La composition de la charge traitée est la suivante :
- n-hexane : 50 %
- i-hexanes (2 méthyl pentane, et 3 méthyl pentane en quantités équivalentes) : 40 %
- méthylcyclopentane : 8 %
- cyclohexane : 2 %.

Les tests sont effectués dans les conditions opératoires suivantes :
- température : 470 °C ou 510 °C
- pression : 1 MPa
- hydrogène/hydrocarbures : 3
- volume horaire de charge par volume de catalyseur : 3

Les résultats obtenus dans ces conditions (conversion totale, rendement en benzène et rendement en hydrogène), sont rapportés dans le tableau 1. Les rendements sont exprimés en % poids par rapport à la charge.

**Tableau 1**

| Catalyseur | température (°C) | conversion (%pds) | Rendement en benzène (%pds) | rendement en H₂ (%pds) |
|---|---|---|---|---|
| A | 470 | 30 | 9 | 0,15 |
| | 510 | 61 | 15 | 0,06 |
| B | 470 | 35 | 11 | 0,18 |
| | 510 | 63 | 16 | 0,09 |
| C | 470 | 38 | 13 | 0,2 |
| | 510 | 66 | 17 | 0,2 |

Le catalyseur C préparé selon l'invention, présente de meilleures performances catalytiques que le catalyseur A préparé selon les techniques de l'art antérieur. De plus les propriétés du catalyseur C sont supérieures à celles du catalyseur B, bien que ces deux catalyseurs aient été préparés à partie du même précurseur d'étain, le catalyseur C ayant été préparé directement dans le réacteur tubulaire du test catalytique.

### EXEMPLE 3

On se propose de traiter une coupe C6, dont la composition a été donnée dans l'exemple 1, dans les conditions opératoires identiques à celles précisées dans l'exemple 2 par des catalyseurs contenant le germanium (0,08 % poids) ou le plomb (0,21 % poids) comme métal additionnel.

Les catalyseurs D et E (comparatifs) ont été préparés comme le catalyseur A si ce n'est que le chlorure stanique a été remplacé par le tétrachlorure de germanium (catalyseur D) et par le nitrate de plomb (catalyseur E). Dans le cas du tétrachlorure de germanium, celui-ci est préalablement dissous dans de l'éthanol avant utilisation.

Les catalyseurs F et G (comparatifs) ont été préparés comme le catalyseur B, si ce n'est que l'on a remplacé le tétrabutylétain par le tétrabutylgermane (catalyseur F) ou le tétraéthylplomb (catalyseur G).

Les catalyseurs H et I (selon l'invention) ont été préparés comme le catalyseur C, si ce n'est que l'on a remplacé le tétrabutylétain par le tétrabutylgermane (catalyseur H) ou le tétraéthylplomb (catalyseur I).

Le tableau 2 compare les performances des catalyseurs D à J. Les rendements sont exprimés en % poids par rapport à la charge.

Les catalyseurs H et I préparés selon l'invention, présentent de meilleures performances catalytiques que les catalyseurs D et E préparés selon les techniques de l'art antérieur. De plus les performances catalytiques de ces catalyseurs sont supérieures à celles des catalyseurs F et G, bien que les catalyseurs H et F ou I et G aient été préparés à partir du même précurseur de germanium ou de plomb, les catalyseurs H et I ayant été préparés directement dans le réacteur tubulaire du test catalytique.

**Tableau 2**

| Catalyseur | température (°C) | conversion (%pds) | Rendement en benzène (%pds) | rendement en H₂ (%pds) |
|---|---|---|---|---|
| D | 470 | 29 | 8 | 0,13 |
| (Ge 0,08 %) | 510 | 59 | 13 | 0,05 |
| E | 470 | 28 | 8 | 0,13 |
| (Pb 0,21 %) | 510 | 58 | 12 | 0,05 |
| F | 470 | 32 | 10 | 0,16 |
| (Ge 0,08 %) | 510 | 61 | 15 | 0,08 |
| G | 470 | 33 | 10 | 0,17 |
| (Pb 0,21 %) | 510 | 62 | 14 | 0,09 |
| H | 470 | 36 | 12 | 0,18 |
| (Ge 0,08 %) | 510 | 64 | 16 | 0,17 |
| I | 470 | 37 | 12 | 0,19 |
| (Pb 0,21 %) | 510 | 65 | 16 | 0,18 |

## Revendications

1. Procédé d'hydroréformage en présence d'un catalyseur renfermant au moins un support, du platine, au moins un métal additionnel M choisi dans le groupe formé par le germanium, l'étain, le plomb, le gallium, l'indium, le rhénium, le tungstène et le thallium et un halogène, procédé dans lequel le catalyseur est obtenu par introduction, dans une masse catalytique appelée précatalyseur calcinée et activée, et renfermant au moins un support et du platine, d'au moins composé organique d'au moins un métal additionnel M, ce métal additionnel étant introduit pur ou dilué, in situ, dans la zone de réaction où se produira le traitement d'une charge en présence dudit catalyseur ou dans une pré zone de réaction directement en contact avec la zone de réaction, ladite introduction ayant lieu sous atmosphère inerte ou réductrice.

2. Procédé selon la revendication 1 dans lequel le catalyseur est préparé selon un procédé comportant la succession des étapes suivantes :
a) dans une première étape de ladite préparation, on prépare hors site un précatalyseur renfermant au moins ledit support et du platine le précatalyseur étant à ce stade soumis à un séchage et à une calcination,
b) on introduit le précatalyseur dans une zone de réaction où sera envoyée la charge à traiter par ledit catalyseur ou dans une pré zone de réaction directement reliée à ladite zone de réaction,
c) on soumet alors le précatalyseur à un traitement d'activation en atmosphère inerte ou en atmosphère réductrice et,
d) dans une deuxième étape de ladite préparation, on introduit ledit métal additionnel M dans le précatalyseur, par mise en contact sous atmosphère inerte ou sous atmosphère réductrice d'au moins un composé organique du métal additionnel M.

3. Procédé selon l'une des revendications 1 ou 2 dans lequel le précatalyseur peut également contenir un métal du groupe VIII.

4. Procédé selon l'une des revendications 1 à 3 dans lequel le précatalyseur renferme au moins un halogène ou un composé halogène.

5. Procédé selon l'une des revendications 1 à 4 dans lequel le composé organique du métal additionnel M est introduit en phase liquide ou en phase gazeuse.

6. Procédé selon l'une des revendications 1 à 5 dans lequel, le composé organique du métal additionnel M est introduit sur le catalyseur dans au moins un solvant d'imprégnation lequel est une solution hydrocarbonée.

7. Procédé selon l'une des revendications 1 à 6 dans lequel l'activation du précatalyseur est réalisée en atmosphère réductrice, en présence d'hydrogène entre 300 et 600 °C.

8. Procédé selon la revendication 7 dans lequel, à l'issue de la préparation du catalyseur, on procède (avant de mettre la charge à traiter au contact du catalyseur) à l'élimination du solvant d'imprégnation du métal additionnel M, puis à un traitement thermique.

9. Procédé selon la revendication 8 dans lequel ledit traitement thermique est effectué sous débit d'hydrogène, à une température comprise entre 300 et 600 °C.

10. Procédé selon l'une des revendications 1 à 9 dans lequel le métal additionnel M est introduit dans le précatalyseur sous la forme d'au moins un composé organométallique ou alcoolate.

11. Procédé selon la revendication 10 dans lequel ledit composé organométallique ou alcoolate est choisi dans le groupe formé par les complexes carbonyles ou polycétoniques du métal M et les hydrocarbylmétaux du métal M tels que les alkyles, cycloalkyles, aryles, alkylaryles et arylalkyles.

12. Procédé selon l'une des revendications 1 à 10 dans lequel ledit composé organique de métal M est choisi dans le groupe constitué par le tétrabutylétain, le tétraméthylétain, le tétrapropylgermanium, le diphénylétain et le tétraéthyl plomb, l'acétylacétonate d'indium, l'acétylacétonate de thallium, l'éthanolate de tallium, le triétylgallium.

13. Procédé selon l'une des revendications 6 à 12 dans lequel ledit solvant d'imprégnation dudit métal M est choisi dans le groupe constitué par les solvants organiques oxygénés comportant de 2 à 8 atomes de carbone par molécule, les hydrocarbures paraffiniques, naphténiques et aromatiques contenant 6 à 15 atomes de carbone par molécule et les composés organiques halogénés contenant 1 à 15 atomes de carbone par molécule.

14. Procédé selon la revendication 13 dans lequel le solvant d'imprégnation est choisi dans le groupe constitué par l'éthanol, le tétrahydrofuranne, le n-heptane, le méthylcyclohexane, le toluène et le chloroforme.

15. Procédé selon l'une des revendications précédentes, dans lequel l'hydroréformage a lieu à une température comprise entre 400 et 600°C, une pression comprise entre 0,1 et 3,5 MPa, une vitesse horaire comprise entre 0,1 et 10 volumes de charge liquide par volume de catalyseur, le rapport hydrogène sur hydrocarbures étant compris entre 1 et 20.

16. Procédé selon l'une des revendications précédentes, dans lequel la température est comprise entre 480 et 580 °C, la pression entre 0,2 et 1,8 MPa, la vitesse horaire entre 1 et 10 volumes de charge liquide par volume de catalyseur et un taux de recyclage comprise entre 1 et 6 moles d'hydrogène par mole de charge.

17. Procédé selon la revendication 16, dans lequel la pression est établie entre 0,3 et 3 MPa.

18. Procédé selon l'une des revendications précédentes, dans lequel le catalyseur renferme également au moins un élément du GVIII.

19. Procédé selon l'une des revendications précédentes, dans lequel le catalyseur renferme également au moins un élément de la famille du platine.

## Patentansprüche

1. Verfahren zum Hydroreformieren, in Anwesenheit eines Katalysators, der wenigstens einen Träger, Platin, wenigstens ein Zusatzmetall M, gewählt aus der Gruppe, die durch Germanium, Zinn, Blei, Gallium, Indium, Rhenium, Wolfram und Thallium gebildet ist und ein Halogen umfaßt, Verfahren, bei dem der Katalysator erhalten wird durch Einführen, in eine katalytische, Vorkatalysator genannte Masse, die kalziniert und aktiviert ist und wenigstens einen Träger und Platin umfaßt, Einführen wenigstens einer organischen Verbindung wenigstens eines Zusatzmetalls M, wobei dieses Zusatzmetall rein oder verdünnt in situ in die Reaktionszone eingeführt wird, wo die Behandlung einer Charge in Anwesenheit dieses Katalysators oder in einer Reaktionsvorzone, die direkt in Kontakt mit der Reaktionszone steht, wobei dieses Einführen unter inerter oder reduzierender Atmosphäre vorgenommen wird, abläuft.

2. Verfahren nach Anspruch 1, bei dem der Katalysator nach einem Verfahren, das nacheinander folgende Schritte umfaßt, hergestellt wird:
a) In einer ersten Stufe dieser Vorbereitung bereitet man ex situ einen Vorkatalysator, der wenigstens diesen Träger und Platin einschließt, vor, wobei der Vorkatalysator in diesem Stadium einer Trocknung und einer Kalzinierung ausgesetzt wird,
b) man führt den Vorkatalysator in eine Reaktionszone, in die die durch diesen Katalysator zu behandelnde Charge geschickt wird oder in eine Reaktionsvorzone, die direkt mit dieser Reaktionszone verbunden ist, ein,
c) man setzt dann den Vorkatalysator einer Aktivierungsbehandlung in inerter Atmosphäre oder in reduzierender Atmosphäre aus und,
d) in einer zweiten Stufe dieser Herstellung führt man dieses Zusatzmetall M in den Vorkatalysator durch Kontaktierung unter inerter Atmosphäre oder in reduzierender Atmosphäre wenigstens einer organischen Verbindung des Zusatzmetalls M ein.

3. Verfahren nach einem der Ansprüche 1 oder 2, bei dem der Vorkatalysator ebenfalls ein Metall der Gruppe VIII enthalten kann.

4. Verfahren nach einem der Ansprüche 1 bis 3, bei dem der Vorkatalysator wenigstens ein Halogen oder eine Halogenverbindung umschließt.

5. Verfahren nach einem der Ansprüche 1 bis 4, bei dem die organische Verbindung des Zusatzmetalls M in flüssiger Phase oder in gasförmiger Phase eingeführt wird.

6. Verfahren nach einem der Ansprüche 1 bis 5, bei dem die organische Verbindung des Zusatzmetalls M auf den Katalysator in wenigstens einem Impregnierungslösungsmittel, das eine kohlenwasserstoffhaltige Lösung ist, eingeführt wird.

7. Verfahren nach einem der Ansprüche 1 bis 6, bei dem die Aktivierung des Vorkatalysators in reduzierender Atmosphäre in Anwesenheit von Wasserstoff zwischen 300 und 600°C vorgenommen wird.

8. Verfahren nach Anspruch 7, bei dem bei Beendigung der Herstellung des Katalysators man (bevor die zu behandelnde Charge mit dem Katalysator kontaktiert wird) zur Eliminierung des Impregnierungslösungsmittels des Zusatzmetalls M, dann zu einer thermischen Behandlung übergeht.

9. Verfahren nach Anspruch 8, bei dem diese thermische Behandlung vorgenommen wird unter einem Wasserstoffstrom bei einer Temperatur zwischen 300 und 600°C.

10. Verfahren nach einem der Ansprüche 1 bis 9, bei dem das Zusatzmetall M in den Vorkatalysator in Form wenigstens einer organometallischen Verbindung oder von Alkoholat eingeführt wird.

11. Verfahren nach Anspruch 10, bei dem diese organometallische Verbindung oder das Alkoholat gewählt ist aus der Gruppe, die durch die Karbonyl- oder Polyketonkomplexe des Metalls M sowie die Hydrokarbylmetalle des Metalls M wie beispielsweise die Alkyle, Zykloalkyle, die Aryle die Alkylaryle und Arylalkyle gebildet ist.

12. Verfahren nach einem der Ansprüche 1 bis 10, bei dem diese organische Verbindung des Metalls M gewählt ist aus der Gruppe, die durch Zinntetrabutyl, Zinntetramethyl, Germaniumtetrapropyl, Zinndiphenyl und Bleitetraethyl, Indiumacetylacetonat, Thalliumacetylacetonat, Thalliumethanolat und Galliumtrietyl gebildet ist.

13. Verfahren nach einem der Ansprüche 6 bis 12, bei dem dieses Impregnierungslösungsmittel dieses Metalls M gewählt ist aus der Gruppe, die gebildet ist durch die sauerstoffhaltigen organischen Lösungsmittel mit 2 bis 8 Kohlenstoffatomen pro Molekül, die paraffinischen, naphthenischen und aromatischen Kohlenwasserstoffe, die 6 bis 15 Kohlenstoffatome pro Molekül enthalten sowie die halogenierten organischen Verbindungen, die 1 bis 15 Kohlenstoffatome pro Molekül enthalten.

14. Verfahren nach Anspruch 13, bei dem das Impregnierungslösungsmittel gewählt ist aus der Gruppe, die durch Ethanol, Tetrahydrofuran, n-Heptan, Methylcyclohexan, Toluol und Chloroform gebildet ist.

15. Verfahren nach einem der vorhergehenden Ansprüche, bei dem die Hydroreformierung bei einer Temperatur zwischen 400 und 600°C, einem Druck zwischen 0,1 und 3,5 MPa, einer Stundengeschwindigkeit zwischen 0,1 und 10 Volumen flüssiger Charge pro Volumenkatalysator stattfindet, wobei das Verhältnis Wasserstoff zu Kohlenwasserstoffen zwischen 1 und 20 beträgt.

16. Verfahren nach einem der vorhergehenden Ansprüche, bei dem die Temperatur zwischen 480 und 580°C, der Druck zwischen 0,2 und 1,8 MPa, die Stundengeschwindigkeit zwischen 1 und 10 Volumen flüssiger Charge pro Volumenkatalysator liegt und ein Recyclierungsverhältnis zwischen 1 und 6 Molen Wasserstoff pro Mol Charge eingehalten wird.

17. Verfahren nach Anspruch 16, bei dem der Druck zwischen 0,3 und 3 MPa eingestellt wird.

18. Verfahren nach einem der vorhergehenden Ansprüche, bei dem der Katalysator auch wenigstens ein Element der GVIII umfaßt.

19. Verfahren nach einem der vorhergehenden Ansprüche, bei dem der Katalysator auch wenigstens ein Element der Platinfamilie umfaßt.

## Claims

1. A process for hydroreforming in the presence of a catalyst containing at least one carrier, platinum, at least one additional metal M selected from the group made up of germanium, tin, lead, gallium, indium, rhenium, tungsten, and thallium, and a halogen, process in which the catalyst is obtained by introducing into a calcined and activated catalytic mass, referred to as a precatalyst and which includes at least one carrier and platinum, at least one organic compound of at least one additional metal M, with this additional metal M being introduced in pure or dilute form, *in situ,* into the reaction zone where the treatment of a charge is to be done in the presence of said catalyst or in a prereaction zone that is in direct contact with the reaction zone, said introduction being accomplished under an inert or reducing atmosphere.

2. A process according to claim 1, wherein the catalyst is prepared according to a process that includes the following sequence of stages :
(a) in the first stage of this preparation ; a precatalyst is prepared off site which contains at least said carrier and platinum, with the precatalyst being subjected to drying and to calcining at this stage ;
(b) the precatalyst is introduced into a reaction zone where the charge will be sent to be treated by said catalyst or to a prereaction zone directly connected to said reaction zone ;
(c) the precatalyst is then subjected to an activation treatment in an inert or reducing atmosphere ; and (d) in a second stage of said preparation, said additional metal M is introduced into the precatalyst by bringing at least one organic compound of said additional metal M into contact with the precatalyst under an inert or reducing atmosphere.

3. A process according to one of claims 1 or 2, wherein the precatalyst also contain a metal from Group VIII.

4. A process according to one of claims 1-3, wherein the precatalyst contains at least a halogen or a halogen compound.

5. A process according to one of claims 1-4, wherein the organic compound of the additional metal M is introduced in the liquid or gaseous phase.

6. A process according to one of claims 1-5, wherein the organic compound of the additional metal M is introduced onto the catalyst in at least one impregnation solvent, which is a hydrocarbon solution.

7. A process according to one of claims 1-6, wherein the activation of the precatalyst is accomplished in a reducing atmosphere in the presence of hydrogen, between 300 and 600°C.

8. A process according to claim 7, wherein, upon the completion of preparation of the catalyst (before the charge to be treated is contacted with the catalysts), the impregnation solvent of the additional metal M is eliminated, and then heat treatment is carried out.

9. A process according to claim 8, wherein said heat treatment is carried out under a stream of hydrogen at a temperature of between 300 and 600°C.

10. A process according to one of claims 1-9, wherein the additional metal M is introduced into the precatalyst in the form of at least one organometallic or alcoholate compound.

11. A process according to claim 10, wherein said organometallic or alcoholate compound is selected from the group composed of carbonylic or polyketonic complexes of metals M, and the hydrocarbyl metals of metal M such as alkyls, cycloalkyls, aryls, alkylaryls, and arylalkyls.

12. A process according to one of claims 1-10, wherein said organic compound of metal M is selected from the group composed of tetrabutyl tin, tetramethyl tin, tetrapropyl germanium, diphenyl tin, and tetraethyl lead, indium acetylacetonate, thallium acetylacetonate, thallium ethanolate, and triethyl gallium.

13. A process according to one of claims 6-12, wherein said impregnation solvent of said metal M is selected from the group composed of the organic oxygenated solvents containing 2-8 carbon atoms per molecule, paraffinic, naphthenic, and aromatic hydrocarbons containing 6-15 carbon atoms per molecule, and halogenated organic compounds containing 1-15 carbon atoms per molecule.

14. A process according to claim 13, wherein the impregnation solvent is selected from the group consisting of ethanol, tetrahydrofuran, n-heptane, methylcyclohexane, toluene, and chloroform.

15. A process according to one of the preceding claims, wherein hydroreforming takes place at a temperature of between 400 and 600°C, at a pressure of between 0.1 and 3.5 MPa, and at an hourly rate of between 0.1 and 10 volumes of liquid charge per volume of catalyst, with the ratio of hydrogen to hydrocarbon being between 1 and 20.

16. A process according to one of the preceding claims, wherein the temperature is between 480°C and 580°C, the pressure is between 0.2 and 1.8 MPa, the hourly rate is between 1 and 10 volumes of liquid charge per volume of catalyst, and the recycling rate is between 1 and 6 mols of hydrogen per mol of charge.

17. A process according to claim 16, wherein the pressure is set between 0.3 and 3 MPa.

18. A process according to one of the preceding claims, wherein the catalyst also contains at least one element from Group VIII.

19. A process according to one of the preceding claims, wherein the catalyst also contains at least one element from the platinum family.
